# EUROPEAN PATENT APPLICATION

(11) **EP 1 557 443 A1**
(43) Date of publication of application: **27.07.2005**
(21) Application number: 03769921.2
(22) Date of filing: 28.10.2003
(51) Int. Cl.: C08L 23/00, C08K 7/00, H01B 7/18

(54) **RESIN COMPOSITION FOR COATING ELECTRIC WIRE AND ELECTRIC WIRE USING THE SAME**

(30) Priority: 29.10.2002 JP 2002314845
(71) Applicant: YAZAKI CORPORATION, Minato-ku Tokyo 108-8333 (JP)
(72) Inventor: YAGI, Kiyoshi, c/o Yazaki Corporation, Susono-shi, Shizuoka 410-1194 (JP); KATSUMATA, Makoto, c/o Yazaki Parts Co., Ltd., Susono-shi, Shizuoka 410-1194 (JP); USHIJIMA, Hitoshi, c/o Yazaki Parts Co., Ltd., Susono-shi, Shizuoka 410-1194 (JP); WATANABE, Shinichi, c/o Yazaki Parts Co., Ltd., Susono-shi, Shizuoka 410-1194 (JP)
(74) Representative: Grünecker, Kinkeldey, Stockmair & Schwanhäusser Anwaltssozietät
(86) International application number: PCT/JP2003/013791
(87) International publication number: WO 2004/039880

(57) **Abstract**

In a resin composition to be used for electric wire sheaths, in which a polyolefin resin and an ultrafine nylon fibers-dispersed polyolefin resin composition are mixed, a blend ratio of a polyolefin (PO) and ultrafine nylon fibers (Ny) in the ultrafine nylon fibers-dispersed polyolefin resin composition preferably falls within a range from 5:5 to 9:1 (PO:Ny). It is further preferable that the blend ratio is 8:2. The resin composition may be comprised of at least one of silica particles and magnesium hydroxide particles.

## Description

### TECHNICAL FIELD

This invention relates to a resin composition for electric wire sheaths and an electric wire using the same.

### DESCRIPTION OF BACKGROUND ART

The use of electric wires has recently been increasing with the advanced performance and sophistication of electrical components for motor vehicles. An electrical conductor, such as copper, having its periphery covered with a polyvinyl chloride resin has hitherto been widely used as such an insulated electric wire. The electric wire using a polyvinyl chloride resin has the advantage of being low in production cost, while its wear resistance, flexibility, withstanding voltage and insulation resistance are relatively high. Moreover, the polyvinyl chloride resin composition is itself excellent in flame retardancy.

However, as the polyvinyl chloride resins produce harmful halogen gas when burning and thereby contaminate the global environment, a search for their substitute or non-halogen materials has been under way.

Thus, attempts have recently been made to use an olefin resin composition, such as polyethylene, as an insulator not containing any halide, and as an insulator for electric wires in a place generating a high temperature, such as a wire harness in a motor vehicle (see, for example, Japanese Patent Publication No. 9-95566A, page 2).

The electric wires used for a wire harness in a motor vehicle, etc. are identified by coloring in specific colors (red, white, black, blue, green, etc.) for facilitating wiring and connection. The coloring of electric wires has hitherto been carried out by one of the following methods (1) to (3):
(1) Not only the surface of the sheath layer but also the inside thereof is uniformly colored by kneading dye or pigment into the insulative resin when the extrusion molding of the insulative resin is performed;
(2) A colored resin film is laminated on the conductor, and a translucent insulative resin is coated by the extrusion molding; and
(3) The conductor is covered with an insulative resin by the extrusion molding, and organic solvent-family ink is applied on the surface of the sheath layer.

However, in the method (1), the productivity is low because the manufacturing line may be frequently stopped when the color is changed. Electric wires which are colored with rare colors may be in stock. In the method (2), it is difficult to surely distinguish colors through the translucent insulative resin coating, so that the wiring or connecting workability is low. In the method (3), a capital investment is necessary to provide a good working environment for using the organic solvent-family ink, thereby increasing the manufacturing cost.

In view of such circumstances, it is proposed that the insulative layer of the electric wire is colored by water-soluble ink containing a polyamine, alcohol, and pigment with predetermined ratios (see Japanese Patent Publication No. 10-251563A, page 2).

However, the water-soluble ink cannot provide a good colorability when the surface comprised of a polyolefin resin component.

### SUMMARY OF THE INVENTION

It is therefore an object of the invention to provide a resin component to be used for electric wire sheaths which is excellent in flexibility, elasticity, dye-colorability, mechanical properties, and wear resistance, and to provide an electric wire using such a resin component.

In order to achieve the above object, according to the invention, there is provided a resin composition to be used for electric wire sheaths, wherein a polyolefin resin and an ultrafine nylon fibers-dispersed polyolefin resin composition are mixed.

Preferably, a blend ratio of a polyolefin (PO) and ultrafine nylon fibers (Ny) in the ultrafine nylon fibers-dispersed polyolefin resin composition falls within a range from 5:5 to 9:1 (PO:Ny). Here, it is preferable that the blend ratio is 8:2 (PO:Ny).

Preferably, the resin composition further comprises at least one of silica particles and magnesium hydroxide particles.

Preferably, the ultrafine nylon fibers-dispersed polyolefin resin composition is comprised of a polyolefin, polyamide fibers, a silane coupling agent and silica particles.

Here, the polyamide fibers are comprised of at least one of silica particles and magnesium hydroxide particles.

Preferably, a mean fiber diameter of the polyamide fibers is not greater than 5 µm, and an aspect ratio thereof falls within a range from 20 to 1000.

According to the invention, there is also provided an electric wire, comprising a sheath comprised of the above resin composition.

In the invention, the tensile elongation (that is, flexibility and elasticity) and the ink colorability are enhanced by mixing the polyolefin resin and the ultrafine nylon fibers-dispersed polyolefin resin composition. Further, the wear resistance and the dye colorability are enhanced by containing the silica particles, the magnesium hydroxide particles, or a mixture of those particles.

### BRIEF DESCRIPTION OF THE DRAWINGS

Fig. 1 is a perspective view showing an electric wire for vehicle according to a first embodiment (single wire) of the invention;
Fig. 2 is a perspective view showing an electric wire for vehicle according to a second embodiment (flat wire) of the invention;
Fig. 3 is a perspective view showing an electric wire for vehicle according to a third embodiment (shielded wire) of the invention;
Fig. 4 is a schematic view for explaining how to perform a scrape wear test; and
Fig. 5 is a schematic view for explaining how to perform a flame retardancy test.

### BEST MODE FOR CARRYING OUT THE INVENTION

There will be described below in detail resin composition for electric wire sheaths and an electric wire according to preferred embodiments of the invention.

Not specifically defined, the polyolefin resin to be used in the resin composition for electric wire sheaths is preferably one having a melting point that falls between 80 and 250°C. Preferred examples of the resin of the type are a homopolymer and a copolymer of olefin having from 2 to 8 carbon atoms, a copolymer of olefin having from 2 to 8 carbon atoms with vinyl acetate, a copolymer of olefin having from 2 to 8 carbon atoms with acrylic acid or its ester, a copolymer of olefin having from 2 to 8 carbon atoms with methacrylic acid or its ester, and a copolymer of olefin having from 2 to 8 carbon atoms with a vinylsilane compound.

Specific examples of the resin are high-density polyethylene, low-density polyethylene, linear low-density polyethylene, polypropylene, ethylene/propylene block copolymer, ethylene/propylene random copolymer, poly-4-methylpentene-1, polybutene-1, polyhexene-1, ethylene/vinyl acetate copolymer, ethylene/vinyl alcohol copolymer, ethylene/acrylic acid copolymer, ethylene/methyl acrylate copolymer, ethylene/ethyl acrylate copolymer, ethylene/propyl acrylate copolymer, ethylene/butyl acrylate copolymer, ethylene/2-ethylhexyl acrylate copolymer, ethylene/hydroxyethyl acrylate copolymer, ethylene/vinyltrimethoxysilane copolymer, ethylene/vinyltriethoxysilane copolymer, ethylene/vinylsilane copolymer. Also preferred for use herein are halogenopolyolefins such as polyethylene chloride, polyethylene bromide, chlorosulfonated polyethylene.

Of those, especially preferred are high-density polyethylene (HDPE), low-density polyethylene (LDPE), linear low-density polyethylene (LLDPE), polypropylene (PP), ethylene/propylene block copolymer (EPBC), ethylene/propylene random copolymer (EPRC), ethylene/vinyl acetate copolymer (EVA), ethylene/ethyl acrylate copolymer (EEA), and ethylene/vinyl alcohol copolymer; and most preferred are those having a melt flow index (MFI) that falls between 0.2 and 50 g/10 min. One or more of these may be used herein either singly or as combined.

Next, there will be described ultrafine nylon fibers-dispersed polyolefin resin composition to be used in the resin composition of the invention.

Also not specifically defined, the nylon component in the nylon fiber to be used in the ultrafine nylon fibers-dispersed polyolefin resin composition (hereinafter, simply referred as "Ny-PO") is a thermoplastic polyamide having an amide group in the backbone chain thereof (this is hereinafter referred to as "polyamide") and having a melting point that falls between 135 and 350°C and is higher by at least 20°C than the melting point of the polyolefin. Preferably, the polyamide has a melting point falling between 160 and 265°C. Also preferably, the polyamide of the type may give tough fibers through extrusion and stretching.

Specific examples of the polyamide are nylon 6, nylon 66, nylon 6-nylon 66 copolymer, nylon 610, nylon 46, nylon 11, nylon 12, nylon MXD6, xylylenediamine/adipic acid polycondensate, xylylenediamine/pimelic acid polycondensate, xylylenediamine/suberic acid polycondensate, xylylenediamine/azelaic acid polycondensate, xylylenediamine/sebacic acid polycondensate, tetramethylenediamine/terephthalic acid polycondensate, hexamethylenediamine/terephthalic acid polycondensate, octamethylenediamine/terephthalic acid polycondensate, trimethylhexamethylenediamine/terephthalic acid polycondensate, decamethylenediamine/terephthalic acid polycondensate, undecamethylenediamine/terephthalic acid polycondensate, dodecamethylenediamine/terephthalic acid polycondensate, tetramethylenediamine/isophthalic acid polycondensate, hexamethylenediamine/isophthalic acid polycondensate, octamethylenediamine/isophthalic acid polycondensate, trimethylhexamethylenediamine/isophthalic acid polycondensate, decamethylenediamine/isophthalic acid polycondensate, undecamethylenediamine/isophthalic acid polycondensate, and dodecamethylenediamine/isophthalic acid polycondensate.

Of those polyamides, especially preferred examples are nylon 6 (PA6), nylon 66 (PA66), nylon 12 (PA12), nylon 6-nylon 66 copolymer. One or more of these may be used herein. Preferably, these polyamides have a molecular weight falling between 10,000 and 200,000.

The fiber diameter of the nylon fiber is not specifically limited, but may be 5 µm or less.

The polyolefin used in the ultrafine nylon fibers-dispersed polyolefin resin composition is the same polyolefin as has been mentioned as the principal component of the resin composition described before.

The weight ratio of the polyolefin resin (PO) and very fine nylon fibers (Ny) in the Ny-PO used according to this invention is not specifically limited, but may be preferably 5:5 to 9:1 (PO:Ny), more preferably 7:3 to 9:1 (PO:Ny), and most preferably 8:2 (PO:Ny).

The amount of Ny-PO used in the resin composition according to this invention is not specifically limited, but may be preferably 100 parts by weight or less, more preferably 50 parts by weight or less, and still more preferably 5 to 20 parts by weight for 100 parts by weight of the resin composition.

Moreover, the resin composition according to this invention preferably contains silica particles or magnesium hydroxide particles or a mixture of those particles to improve the wear resistance and coloring property of a molded resin product obtained from the resin composition.

The silica particles which the resin composition according to this invention may contain (including those subjected to surface treatment by a surface treating agent, or treating method, such as coupling or CVD method) are not specifically limited, but may have a particle diameter of preferably 1 nm to 100 µm, and particularly preferably 1 nm to 100 nm.

The magnesium hydroxide particles which the resin composition according to this invention may contain (including those subjected to surface treatment by a surface treating agent, or treating method, such as coupling or CVD method) are not specifically limited, but may have a particle diameter of preferably 1 nm to 100 µm, particularly preferably 10 nm to 10 µm, and still more preferably 10 nm to 1000 nm.

The amount of the silica or magnesium hydroxide particles or a mixture of those particles which the resin composition according to this invention may contain is not specifically limited, but may be 100 parts by weight or less, more preferably 60 parts by weight or less, and still more preferably 10 to 30 parts by weight for 100 parts by weight of the resin composition.

Moreover, it is possible to use in the resin composition according to this invention a ultrafine nylon fibers-dispersed polyolefin resin composition (Ny-PO) containing a polyolefin, polyamide fibers, a silane coupling agent and silica or magnesium hydroxide particles or a mixture of those particles. The use of such Ny-PO makes it possible to improve the wear resistance of the resin composition according to this invention to a further extent.

Such Ny-PO may be of the polyamide fibers containing or not containing silica or magnesium hydroxide particles or a mixture of those particles.

The polyolefin used in the Ny-PO containing a polyolefin, polyamide fibers, a silane coupling agent and silica or magnesium hydroxide particles or a mixture of those particles is not specifically limited, but may be the same polyolefin as has been mentioned as the principal component of the resin composition described before.

The polyamide used in the above Ny-PO is not specifically limited, but may be the same as has been mentioned as the nylon component of the resin composition described before.

An organic peroxide may be used together with the silane coupling agent. When an organic peroxide is used together with it, then radicals may be formed in the molecular chains of the polyolefin component and they may react with the silane coupling agent to promote the reaction of the polyolefin component and the silane coupling agent. The amount of the organic peroxide to be used may be from 0.01 to 1.0 part by weight relative to 100 parts by weight of the polyolefin component. Preferably, the temperature for the half-life period for one minute of the organic peroxide is the same as the higher one of the melting point of the polyolefin component or the melting point of the silane coupling agent or is higher by around 30°C than that temperature. Concretely, the temperature for the half-life period for one minute of the organic peroxide preferably falls between 110 and 200°C or so.

Specific examples of the organic peroxide are di-α-cumyl peroxide, 1,1-di-t-butylperoxy-3,3,5-trimethylcyclohexane, 1,1-di-t-butylperoxycyclohexane, 2,2-di-t-butylperoxybutane, n-butyl 4,4-di-t-butylperoxyvalerate, 2,2-bis(4,4-di-t-butylperoxycyclohexane)propane, 2,2,4-trimethylpentylperoxy neodecanoate, α-cumylperoxy neodecanoate, t-butylperoxy neohexanoate, t-butylperoxy pivalate, t-butylperoxy acetate, t-butylperoxy laurate, t-butylperoxy benzoate, t-butylperoxy isophthalate. Above all, preferred are those of which the temperature for the half-life period for one minute falls between a temperature at which the components are melt-kneaded and a temperature higher by around 30°C than the melt-kneading temperature, concretely the temperature for the half-life period for one minute thereof preferably falls between 80 and 260°C, approximately.

The silica particles, the magnesium hydroxide particles or the mixture of those particles to be used in the Ny-PO are not is not specifically limited, but may be the same as have been mentioned as the silica particles, the magnesium hydroxide particles or a mixture of those particles of the resin composition described before.

Also not specifically defined, the content of the silica particles, the magnesium hydroxide particles or the mixture of those particles to be in the Ny-PO is preferably from 1 to 100 parts by weight, more preferably from 1 to 60 parts by weight relative to 100 parts by weight of the polyolefin resin composition.

If the amount is greater than 60 parts by weight, the strength of the composition could not high.

If, on the other hand, the amount is less than 1 part by weight, the hydrogen bond part between the silane coupling agent and the silica particles, the magnesium hydroxide particles or the mixture of those particles will be unsatisfactory and the composition could not also have the intended abrasion resistance and strength.

In fact, however, the preferred amount of the silica particles, the magnesium hydroxide particles or the mixture of those particles varies depending on the kneading condition in preparing the polyolefin resin composition of the invention, and therefore it may be suitably determined before the constituent components are kneaded.

Almost all of the polyamide component in the Ny-PO forms fine fibers that are uniformly dispersed in the matrix of the composition. Concretely, at least 70 % by weight, preferably at least 80 % by weight, more preferably at least 90 % by weight of the polyamide component forms fine fibers that are uniformly dispersed in the matrix. Preferably, the mean fiber diameter of the polyamide component fibers is at most 1 µm, and the mean fiber length thereof is at most 100 µm. Also preferably, the aspect ratio (ratio of fiber length/fiber diameter) of the fibers falls between 20 and 1,000. The polyolefin component bonds to the polyamide component at their interface.

Next, there will be described a method for producing the Ny-PO containing the polyolefin, the polyamide fibers, the silica coupling agent, and the silica particles, the magnesium hydroxide particles or the mixture of those particles as described the above. The method for producing the Ny-PO includes the following two ways.
(A) A resin composition that comprises a polyolefin, polyamide fibers and a silane coupling agent is previously prepared and this is kneaded with silica particles.
(B) A polyolefin, a polyamide, a silane coupling agent and silica particles are kneaded.

Though not specifically defined, the method for preparing the resin composition that comprises a polyolefin, polyamide fibers and a silane coupling agent in the mode (A) comprises, for example, the following steps:
(A1) melt-kneading a polyolefin (component 1) and a silane coupling agent (component 2) to chemically modify the component 1;
(A2) melt-kneading a polyamide (component 3) with the component 1 that has been chemically modified with the component 2, at a temperature not lower than the melting point of the component 3;
(A3) melt-kneading, chemically modifying and extruding the polyamide component 3 with the component 1 that has been chemically modified with the component 2 at a temperature not lower than the melting point of the component 3;
(A4) stretching or rolling the melt-kneaded and chemically-modified extrudate at a temperature not lower than the melting point of the component 1 but not higher than the melting point of the component 3 with drafting it;
(A5) cooling the stretched or rolled composition to room temperature and pelletizing it; and
(A6) optionally adding a remaining polyolefin component 1 to the pellets, and further melt-kneading it at a temperature not higher than the melting point of the component 3, cooling and pelletizing it.

Step (A1) will be described below. The melt-kneading temperature is not lower than the melting point of the component 1, but preferably higher by 30°C than the melting point. When the two are melt-kneaded at a temperature higher by 30°C than the melting point of the component 1, then the component 1 reacts with the component 2 and is chemically modified by the component 2. Melt-kneading them may be effected in any ordinary device generally used for kneading resin or rubber. The device includes, for example, Banbury mixer, kneader, kneader extruder, open roll, single-screw kneader, double-screw kneader. Of those devices, most preferred is a double-screw kneader as it may achieve continuous melt-kneading within a short period of time (the same shall apply to the steps mentioned below).

Step (A2) will be described below. The melt-kneading temperature is not lower than the melting point of the component 3, but preferably higher by 10°C than the melting point. If the melt-kneading temperature is lower than the melting point of the component 3, the components could not be kneaded and could not be fibrously dispersed. Therefore, they are melt-kneaded at a temperature higher than the melting pint, especially preferably higher by 20°C than the melting point of the component 3.

Step (A3) will be described below. The kneaded mixture obtained in the step is extruded out through a spinneret or through an inflation die or T-die. Spinning and extruding the mixture must be effected at a temperature higher than the melting point of the component 3. Concretely, it is desirable that the operation is effected at a temperature higher by 30°C than the melting point of the component 3. Even when the operation of melt-kneading the mixture is effected at a temperature lower than the melting point of the component 3, the kneaded mixture could not have a structure of fine fibers of the component 3 dispersed in the matrix of the component 1. Accordingly, even when the kneaded mixture of the type is spun and stretched, the component 3 could not form fine fibers.

Step (A4) will be described below. The extruded, string-like or yarn-like product is continuously cooled, stretched or rolled. Cooling the fibrous product followed by stretching or rolling it is effected at a temperature lower by 10°C than the melting point of the component 3. Stretching and rolling it gives tougher fibers, and the treatment is favorable since the fiber-reinforced resin composition thus produced may have better properties. The stretching or rolling treatment may be effected, for example, by extruding the kneaded mixture through a spinneret to spin it into a string-like or yarn-like product, followed by winding it around a bobbin with drafting. If desired, it may be pelletized into pellets. Drafting the fibrous product as referred to herein means that the winding-up speed of the product is higher than the speed thereof that passes through a spinneret. Preferably, the ratio of winding-up speed/spinneret speed (draft ratio) falls between 1.5 and 100, more preferably between 2 and 50, even more preferably between 3 and 30.

Step (A5) will be described below. The polyamide fiber-reinforced polyolefin resin composition is preferably in the form of pellets since any additional resin or rubber component may be added to and uniformly kneaded with them. The pelletized resin composition may be uniformly kneaded with such additional rubber or resin, and it may readily give a polyamide fiber-reinforced resin composition with fine fibers uniformly dispersed therein.

Though described separately hereinabove, the respective steps may be combined into one continuous process to be effected in a double-screw kneader having a plurality of supply ports each feeding one of the respective components and a peroxide or the like into the kneader and having a plurality of kneading zones each correspond to one of the supply ports. Comprising the thus-combined steps, the process is more economical, stable and safe.

The method of kneading the resin composition that comprises a polyolefin, polyamide fibers and a silane coupling agent, with silica particles, the magnesium hydroxide particles or the mixture of those particles is not specifically defined. For example, pellets of the resin composition that comprises a polyolefin, polyamide fibers and a silane coupling agent (component 4) may be thermally kneaded with silica particles, magnesium hydroxide particles or the mixture of those particles, (component 5) in a Banbury mixer, kneader, kneader extruder, open roll, single-screw kneader or double-screw kneader, at a temperature higher by 10°C than the melting point of polyolefin but not higher than the melting point of polyamide.

It is presumed that a hydrogen bond may be formed between the component 5 and the silane coupling agent in the component 4 through the thermal kneading operation as above. The thermally-kneaded mixture is preferably extruded, stretched or rolled, and pelletized.

The method of producing the Ny-PO that comprises a polyolefin, polyamide fibers, a silane coupling agent and silica particles, magnesium hydroxide particles or a mixture of those particles in the production mode (B) is not specifically defined. For example, it comprises the following steps:
(B1) melt-kneading a polyolefin (component 1) with a silane coupling (component 2) and silica particles, magnesium hydroxide particles or a mixture of those particles (component 5) to chemically modify the component 1;
(B2) melt-kneading a polyamide (component 3) with the component 1 that has been chemically modified with the component 2, at a temperature not lower than the melting point of the component 3;
(B3) melt-kneading, chemically modifying and extruding the polyamide component 3 with the component 1 that has been chemically modified with the component 2 at a temperature not lower than the melting point of the component 3;
(B4) stretching or rolling the melt-kneaded and chemically-modified extrudate at a temperature not lower than the melting point of the component 1 but not higher than the melting point of the component 3 with drafting it;
(B5) cooling the stretched or rolled composition to room temperature and pelletizing it; and
(B6) optionally adding a remaining polyolefin component 1 to the pellets, and further melt-kneading it at a temperature not higher than the melting point of the component 3, cooling and pelletizing it.

Step (B1) will be described below. The melt-kneading temperature is not lower than the melting point of the component 1, but preferably higher by 30°C than the melting point. When the components are melt-kneaded at a temperature higher by 30°C than the melting point of the component 1, then the component 1 reacts with the component 2 and is chemically modified by the component 2. Melt-kneading them may be effected in any ordinary device generally used for kneading resin or rubber. The device includes, for example, Banbury mixer, kneader, kneader extruder, open roll, single-screw kneader, double-screw kneader. Of those devices, most preferred is a double-screw kneader as it may achieve continuous melt-kneading within a short period of time (the same shall apply to the steps mentioned below).

Step (B2) will be described below. The melt-kneading temperature is not lower than the melting point of the component 3, but preferably higher by 10°C than the melting point. If the melt-kneading temperature is lower than the melting point of the component 3, the components could not be kneaded and could not be fibrously dispersed. Therefore, they are melt-kneaded at a temperature higher than the melting pint, especially preferably higher by 20°C than the melting point of the component 3.

Step (B3) will be described below. The kneaded mixture obtained in the step is extruded out through a spinneret or through an inflation die or T-die. Spinning and extruding the mixture must be effected at a temperature higher than the melting point of the component 3. Concretely, it is desirable that the operation is effected at a temperature higher by 30°C than the melting point of the component 3. Even when the operation of melt-kneading the mixture is effected at a temperature lower than the melting point of the component 3, the kneaded mixture could not have a structure of fine fibers of the component 3 dispersed in the matrix of the component 1. Accordingly, even when the kneaded mixture of the type is spun and stretched, the component 3 could not form fine fibers. Step (B4) will be described below. The extruded, string-like or yarn-like product is continuously cooled, stretched or rolled. Cooling the fibrous product followed by stretching or rolling it is effected at a temperature lower by 10°C than the melting point of the component 3. Stretching and rolling it gives tougher fibers, and the treatment is favorable since the fiber-reinforced resin composition thus produced may have better properties. The stretching or rolling treatment may be effected, for example, by extruding the kneaded mixture through a spinneret to spin it into a string-like or yarn-like product, followed by winding it around a bobbin with drafting. If desired, it may be pelletized into pellets. Drafting the fibrous product as referred to herein means that the winding-up speed of the product is higher than the speed thereof that passes through a spinneret. Preferably, the ratio of winding-up speed/spinneret speed (draft ratio) falls between 1.5 and 100, more preferably between 2 and 50, even more preferably between 3 and 30.

Step (B5) will be described below. The polyamide fiber-reinforced polyolefin resin composition is preferably in the form of pellets since any additional resin or rubber component may be added to and uniformly kneaded with them. The pelletized resin composition may be uniformly kneaded with such additional rubber or resin, and it may readily give a polyamide fiber-reinforced resin composition with fine fibers uniformly dispersed therein.

Though described separately hereinabove, the respective steps may be combined into one continuous process to be effected in a double-screw kneader having a plurality of supply ports each feeding one of the respective components and a peroxide or the like into the kneader and having a plurality of kneading zones each corresponding to one of the supply ports. Comprising the thus-combined steps, the process is more economical, stable and safe.

Thermally kneaded in the manner as above, the component 1 reacts with the component 2 and is thereby chemically modified with the latter, and fine fibers of the component 3 are dispersed in the matrix of the component 1. As the case may be, whisker fibers of the component 1 that are finer than the fine fibers of the component 3 may be formed on the surfaces of the fibers of the component 3. In this embodiment, the component 3 is also modified with the component 2. It is presumed that the component 5 may chemically bond to the component 1 and the component 3 at their parts that have been chemically modified with the component 2 to thereby partially crosslink the component 1 and the component 3. The gel fraction of this embodiment with the component 5 added thereto is higher than that of the other case not containing the component 5. To that effect, the component 5 improve various properties of the resin composition.

As regards a method for obtaining the resin composition according to this invention, there is no specific limitation, but it is possible to mention, for example, a method in which a polyolefin resin and Ny-PO, and also silica or magnesium hydroxide particles or a mixture of those particles are pre-blended by using a high-speed mixing device, such as a Henschel mixer, and are thereafter kneaded by using a known kneading machine, such as a single-screw extruder, a double-screw extruder, a Banbary mixer, a kneader or a roll mill.

The resin composition according to this invention may further contain various kinds of auxiliary components which are usually incorporated, for example, any of various kinds of oxidation inhibitors, such as of the phenol, phosphorus or sulfur type, a nucleating agent, an antistatic agent, a metal fatty acid salt, a lubricant such as of the amide, silicone or Teflon type, a slip agent, a processing aid, a metal inactivating agent, an ultraviolet inhibitor, and a filler such as carbon black, white carbon, calcium carbonate, magnesium silicate, ferrite, zeolite, montmorillonite, barium sulfate, clay, talc or zinc white, to the extent not injuring the effects of this invention.

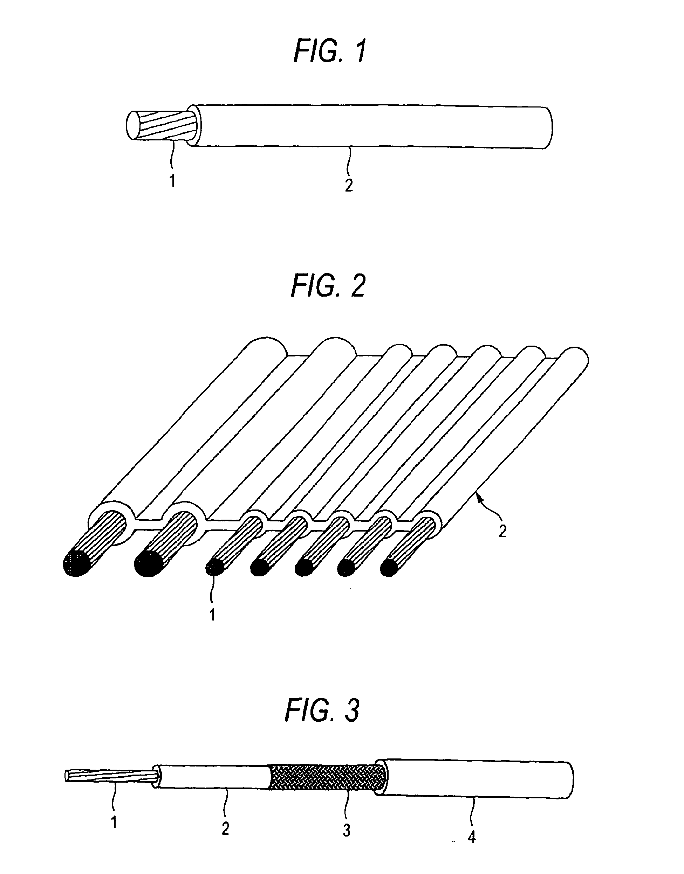

This invention also provides an electric wire for which the above resin composition is employed as an insulating material. There is no limitation to the kind or structure of the electric wire, but the use of the above resin composition as an insulator for, for example, a single wire as shown in Fig. 1, a flat wire as shown in Fig. 2 or a shielded wire as shown in Fig. 3 makes it possible to achieve a satisfactory improvement in flexibility and softness, dye coloring property and also wear resistance. In the drawing, reference numeral 1 denotes a conductor, 2 denotes an insulator, 3 denotes a braided shield, and 4 denotes a sheath.

There is no limitation as to a method for forming an insulator on an electric wire, either, but various known methods can be employed. For example, an extruder may be a single-screw extruder having a cylinder diameter of 20 to 90 mm and an UD of 10 to 40, and having a screw, a crosshead, a breaker grate, a distributor, a nipple and dice. The above resin composition is charged into the single-screw extruder set at a temperature allowing the resin composition to melt thoroughly. The resin composition is melted and kneaded by the screw, and a specific amount thereof is supplied to the crosshead via the breaker plate. The molten resin composition is caused by the distributor to flow in onto the circumference of the nipple. The resin composition which has flown in is extruded by the dice onto the circumference of the conductor in a state coating it, whereby an electric wire having an insulator is obtained.

Specific numerical examples will now be described, but this invention is not limited thereto.

**Table 1**

| sample No. | | 1 | 2 | 3 | 4 |
|---|---|---|---|---|---|
| composition of materials | low-density polyethylene | 100 | 100 | 100 | 100 |
| | bromine-containing flame retardant | 35 | 35 | 10 | |
| | additive | 2 | 2 | 2 | 2 |
| | Ny-PO (Ny wt%) | 10 (2) | 10 (2) | 10 (2) | 10 (2) |
| | silica particles 16nm | | 10 | | 5 |
| | magnesium hydroxide particles 80 nm | | | 60 | 5 |

| electron-beam crosslinking (Present or Absent) | | A | A | A | A |
|---|---|---|---|---|---|
| properties of electric wire | tensile strength (MPa) | 11.5 | 12.5 | 11.0 | 11.5 |
| | elongation (%) | 540 | 540 | 350 | 330 |
| | wear resistance (number of times) | 150 | 210 | 120 | 140 |
| | flame retardancy (sec) | 5 | 5 | 6 | 12 |
| colorability | before coloring | 225 | 225 | 220 | 220 |
| | 25°C | 210 | 200 | 200 | 200 |
| | 60°C | 170 | 160 | 150 | 150 |

| sample No. (c: comparative) | | 5 | 6 | c1 | c2 |
|---|---|---|---|---|---|
| composition of materials | low-density polyethylene | 100 | 100 | 100 | 100 |
| | bromine-containing flame retardant | 35 | 35 | 35 | 35 |
| | additive | 2 | 2 | 2 | 2 |
| | Ny-PO | 10 | 10 | | |
| | (Ny wt%) | (2) | (2) | | |
| | silica particles 16nm | | 10 | | 10 |
| | magnesium hydroxide particles 80 nm | | | | |

| electron-beam crosslinking (Present or Absent) | | P | P | P | P |
|---|---|---|---|---|---|
| properties of electric wire | tensile strength (MPa) | 11.5 | 12.2 | 10.1 | 9.7 |
| | elongation (%) | 410 | 405 | 410 | 390 |
| | wear resistance (number of times) | 235 | 260 | 160 | 195 |
| | flame retardancy (sec) | 4 | 3 | 6 | 6 |
| colorability | before coloring | 230 | 230 | 235 | 230 |
| | 25°C | 220 | 215 | 230 | 225 |
| | 60°C | 195 | 185 | 215 | 205 |

### [Evaluation for extrusion torque]

Each resin composition composed of the components as shown in Table 1 was charged into an electric wire extruder (φ60 mm, UD = 24.5, FF screw) and extruded onto a conductor having a conductor area of 0.5387 mm² at an extruding speed of 600 mm/min. and an extruding temperature of 200°C to make an electric wire having a finished outside diameter of 1.50 mm.

The numerical unit for the composition of materials in Table 1 is parts by weight. In the ultrafine nylon fibers-dispersed polyolefin resin composition (Ny-PO), the polyolefin was silane-modified polyethylene obtained by mixing 80 parts by weight of low-density polyethylene [having a melting point of 110°C and an MFR of 5.0 (g/10 min.)] with 1.0 part by weight of γ-methacryloxypropyltrimethoxysilane as a silane coupling agent, 0.5 part by weight of Irganox 1010 as an oxidation inhibitor and 0.5 part by weight of d-α-cumyl peroxide (having a concentration of 40%) as a peroxide, charging their mixture into a double-screw extruder having a diameter of 45 mm and heated to 170°C and kneading and palletizing it. The whole amount of the silane-modified polyethylene as obtained, 20 parts by weight of nylon 6 (having a melting point of 215 to 225°C) as a nylon component and 0.5 part by weight of Irganox 1010 were kneaded in a double-screw extruder set at 235°C and having a diameter of φ3 mm. Die, extruded in a strand form through the die, and it was cooled by air, taken up in a draft ratio of 7 by a take-up roll, and stretched to 1.5 times between 5-inch rolls at room temperature, whereby pellets were obtained.

### [Evaluation of Electric Wires for Properties]

The electric wires made by the electric wire extruder above were evaluated for tensile properties (yield, breakdown strength and elongation), wear resistance and flame retardancy. The test results are shown in Table 1.

### <Tensile Test>

A electric wire specimen having a length of about 150 mm was marked in its middle portion with gages having a distance of 50 mm therebetween, was attached to a chuck in a testing device as specified by JIS B7721, and was pulled at a pulling rate of 200 mm/min., and its tensile elongation was determined from the maximum tensile load (MPa) and the length as found between the gages when it was broken.

### <Wear Resistance>

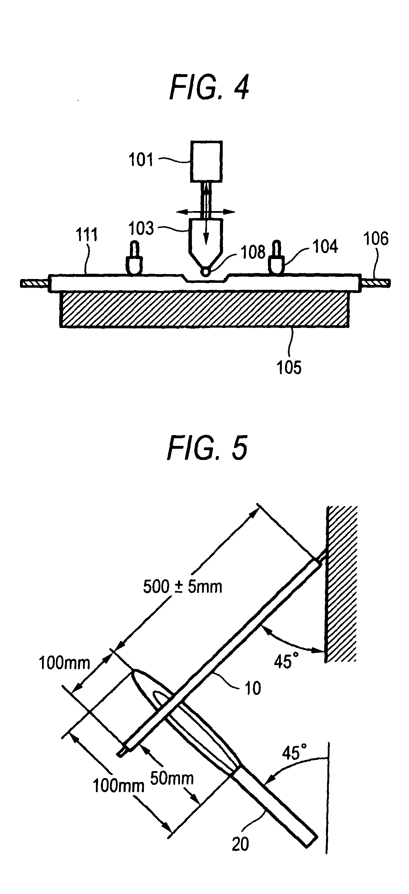

The test was conducted by using a scrape wear testing device as shown in Fig. 4. More specifically, an electric wire specimen 111 having a length of about 1 m was placed on a sample holder 105 and fixed by a clamp 104. A plunger 103 provided at its end with a piano wire 108 having a diameter of 0.45 mm was pressed against the electric wire specimen 111 at a total load of 7 N by using a pressing member 101 and reciprocated along it (along a reciprocating distance of 14 mm) until the insulator on the electric wire specimen 111 was worn and the piano wire 108 of the plunger 103 contacted the conductor 106 in the electric wire specimen 111, and the number of times of reciprocation as completed until then was determined.

### <Flame retardancy>

An electric wire specimen 10 having a length of 600 mm or more was set in an inclined position at an angle of 45° in a windless tank, as shown in Fig. 5, and a reducing flame was applied for 15 seconds by a Bunsen burner 20 to it at a point 500 ± 5 mm from its upper end, and the time after which for the flame to go out was determined.

### [Evaluation for Colorability]

A coloring solution was prepared by dissolving 3% by weight of Plast Blue 8580 as a dye in xylene. The coloring treatment of each electric wire obtained as described before was carried out by dipping it in the coloring solution at temperatures of 25 and 60°C for 10 seconds and washing it with xylene.

The coloration of the electric wire after coloring treatment was read as image data by a computer and the color density of the image data was determined in accordance with a gray scale by using image processing software. The gray scale was for graduating color density in a range from 0 (black) to 255 (white). The test results are shown in Table 1.

## Claims

1. A resin composition to be used for electric wire sheaths, wherein a polyolefin resin and an ultrafine nylon fibers-dispersed polyolefin resin composition are mixed.

2. The resin composition as set forth in claim 1, wherein a blend ratio of a polyolefin (PO) and ultrafine nylon fibers (Ny) in the ultrafine nylon fibers-dispersed polyolefin resin composition falls within a range from 5:5 to 9:1 (PO:Ny).

3. The resin composition as set forth in claim 2, wherein the blend ratio is 8:2 (PO: Ny).

4. The resin composition as set forth in claim 1, further comprising at least one of silica particles and magnesium hydroxide particles.

5. The resin composition as set forth in claim 1, wherein the ultrafine nylon fibers-dispersed polyolefin resin composition is comprised of a polyolefin, polyamide fibers, a silane coupling agent and silica particles.

6. The resin composition as set forth in claim 5, wherein the polyamide fibers are comprised of at least one of silica particles and magnesium hydroxide particles.

7. The resin composition as set forth in claim 1, wherein a mean fiber diameter of the polyamide fibers is not greater than 5 µm, and an aspect ratio thereof falls within a range from 20 to 1000.

8. An electric wire, comprising a sheath comprised of the resin composition as set forth in claim 1.
